(19) Europäisches Patentamt / European Patent Office / Office européen des brevets

(11) **EP 4 610 893 A1**

(12) **EUROPEAN PATENT APPLICATION**

(43) Date of publication:
**03.09.2025 Bulletin 2025/36**

(21) Application number: **24382213.7**

(22) Date of filing: **28.02.2024**

(51) International Patent Classification (IPC):
**G06N 10/20** $^{(2022.01)}$    **G06N 10/60** $^{(2022.01)}$
**G06N 10/80** $^{(2022.01)}$

(52) Cooperative Patent Classification (CPC):
**G06N 10/60; G06N 10/20;** G06N 10/80

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- **Consejo Superior de Investigaciones Científicas (CSIC)**
  **28006 Madrid (ES)**
- **Universitat de València**
  **46010 Valencia (ES)**

- **Universidad De Salamanca**
  **37008 Salamanca (ES)**

(72) Inventors:
- **RAMÍREZ URIBE, Norma Selomit**
  **Valencia (ES)**
- **RENTERÍA OLIVO, Andrés Ernesto**
  **Valencia (ES)**
- **RODRIGO GARCÍA, Germán Vicente**
  **Valencia (ES)**
- **SBORLINI, German Roberto Fabricio**
  **Salamanca (ES)**

(74) Representative: **Pons IP**
**Glorieta Rubén Darío 4**
**28010 Madrid (ES)**

(54) **METHOD FOR GENERATING IN A RANDOM ORDER DIRECTED ACYCLIC GRAPH (DAG) CONFIGURATIONS OF A GIVEN GRAPH IN A QUANTUM COMPUTING DEVICE**

(57) Method for generating in a random order directed acyclic graph (DAG) configurations in a quantum computing device comprising: providing an arbitrary undirected graph in terms of vertices and edges; defining a first quantum register $|e\rangle$, encoding the directions of the edges, a second quantum register, $|a\rangle$, collecting cyclic clauses; a third quantum register, $|out\rangle$, storing a validation of acyclicity; and a classical register, $|c\rangle$, storing the measurement of the edge states at the end of the procedure; initializing the first quantum register, $|e\rangle$, in a uniform superposition; the second quantum register, $|a\rangle$, to 11); and the third quantum register, $|out\rangle$, to one of the Bell states; applying an oracle operator, which encodes all the cyclic clauses for generating DAG configurations from a given arbitrary undirected graph by using multicontrolled Toffoli gates and NOT gates exclusively, setting all the qubits but $|out\rangle$ to its initial state; and randomly selecting DAG configurations.

**EP 4 610 893 A1**

## Description

### OBJECT OF THE INVENTION

The invention is referred to the field of quantum computing, more particularly to the use of directed acyclic graphs (DAGs) in quantum computing.

The object of the invention is a method for generating in a random order DAG configurations of a given graph in a quantum computing device which allows to harness the power of multicontrolled Toffoli quantum gates for efficient processing of quantum information.

### BACKGROUND ART

Quantum Mechanics is a fundamental law of physics that describes the physical properties of nature at the scale of atoms and subatomic particles.

Quantum computing is an innovative technology that exploits the principles of Quantum Mechanics to perform computational tasks with exponential speed and efficiency compared to classical computer systems. Traditional computers process information using bits that represent either a 0 or a 1, while quantum computers employ quantum bits, or qubits, that represent either $|0\rangle$, $|1\rangle$ or a superposition of both states simultaneously. This unique property of qubits allows quantum computers to perform certain calculations and solve complex problems more efficiently.

Conventional quantum computing is based on the execution of a set of universal gates acting on a single qubit or two qubits at most. A quantum circuit is a model for quantum computation representing a sequence of initializations of qubits, quantum gates and measurements.

Toffoli gates, also known as controlled-controlled-not (CCNOT) gates, are universal reversible logic gates that are an essential component in quantum computing. The

Toffoli gate involves two control qubits and one target qubit. The state of the target qubit is inverted if the first and second qubits are both in the $|1\rangle$ state, otherwise the target qubit is left unchanged. Multicontrolled Toffoli gates are Toffoli gates involving $n$ qubits, with $n - 1$ control qubits and one target qubit.

A graph is a collection of vertices and edges connecting subsets of them. Each edge connecting two vertices can flow in two opposite directions. The graph is called directed if the directions of the edges are specified; otherwise, it is called undirected.

Directed acyclic graphs (DAGs) are a fundamental data structure used in various fields to model and solve complex problems. Unlike general graphs, DAGs contain directed edges and have no cycles, which makes them especially useful for representing dependencies and relationships between entities. For example, DAGs find widespread applications in diverse domains, ranging from task scheduling and dependency management to compiler optimization, electronic design automation, data flow analysis, probabilistic modeling, computational biology, and machine learning.

Multicontrolled Toffoli gates could be set up in one-to-one correspondence with each of the potential cycles of an undirected graph and could represent the most efficient quantum approach to probe if a directed graph configuration is cyclic or acyclic.

Also, it has to be noted that some conventional methods have been proposed in the art for identifying DAG configurations of an undirected graph such as the method described in CN113326402A.

### DESCRIPTION OF THE INVENTION

The present invention discloses a method for generating efficiently and in a random order all the DAG configurations of an arbitrary undirected graph, which could be entirely defined by a set of vertices and edges, based on the implementation of an engineered quantum circuit in a quantum computer system.

The method of the invention provides a more efficient way of identifying all the DAG configurations of an undirected graph than conventional methods, introduces randomness and uses fewer quantum resources (qubits) than other quantum algorithms of the state of the art.

Also, the generality of the method of the invention allows for it to be used in any field where DAGs are used as the principal data structure.

The invention is inspired by the use of multiloop Feynman diagrams in particle physics, where DAG configurations represent causal interaction paths, and the identification of DAG configurations is used to bootstrap a manifestly causal integrand representation of multiloop Feynman diagrams in the loop-tree duality formalism.

The quantum method of the invention allows the random generation of DAGs among all possible configurations of an arbitrary undirected graph composed of vertices and edges connecting subsets of them.

The method is based on engineering a quantum oracle operator that is constructed using a sequence of multicontrolled Toffoli quantum gates and NOT quantum gates, also known as Pauli-X gates in quantum computing. The multicontrolled Toffoli gates are the core elements used to tag the acyclic configurations.

Also, a diffusion operator is applied to enhance the amplitude of the tagged acyclic configurations represented by a set of qubits brought into superposition and thus increase their probability of selection. Then, DAG configurations are randomly selected from the measurement of the resulting quantum state representing the superposition of the qubits.

More particularly, the method of the invention comprises the steps of:

- providing an arbitrary undirected graph in terms of vertices and edges;
- defining a first quantum register $|e\rangle$, composed of $n$ qubits, which encodes directions of the edges;
- defining the Boolean functions:

$$s_j \equiv \bigwedge_{i \in s_j} e_i, \quad \bar{s}_j \equiv \bigwedge_{i \in s_j} \bar{e}_i,$$

where $s_j$ labels the set of edges $e_i$ connecting two non-adjacent vertices, the bar in $\bar{s}_j$ denotes that the qubit states in this set are inverted with NOT quantum gates ($|\bar{e}_i\rangle = X|e_i\rangle$); the number of edges in the set $s_j$ is denoted by $n_{s_j}$ and the total number of edges in the graph is:

$$n = \sum_j n_{s_j};$$

- defining a second quantum register $|a\rangle$, needing $m$ qubits, wherein $m$ is dependent on the number of cycles to probe;
- defining a third quantum register, $|out\rangle$, needing one qubit, the oracle tagger, which stores a validation of acyclicity;
- defining a classical register, $|c\rangle$, which stores the measurement of the edge states at the end of the procedure;
- initializing the first quantum register, $|e\rangle$, in a uniform superposition by applying Hadamard gates to each of the $n$ qubits stored, by applying: $|e\rangle = H^{\otimes n}|0\rangle$;
- initializing the second quantum register $|a\rangle$, stating the cyclic clauses to $|1\rangle$ by the application of Pauli-X gates to the initial state, by applying: $|a\rangle = X^{\otimes m}|0\rangle$;
- initializing the third quantum register, $|out\rangle$, stating the tagging marker qubit to one of the Bell states by applying: $|out\rangle = H(X|0\rangle) \equiv |-\rangle$;
- applying an oracle operator, which encodes all the cyclic clauses for generating DAG configurations from a given arbitrary undirected graph, given by:

$$U_w|e\rangle|a\rangle|out\rangle = (-1)^{f(a,e)}|e\rangle|a\rangle|out\rangle,$$

where $f(a, e) = (\wedge_i a_i) \wedge (\wedge_j e_j)$ and $e_j$ are edge qubits whose states are fixed.

In most cases, only the state of a single edge qubit is fixed;

- returning all the qubits but $|out\rangle$ to their initial state by performing the oracle operations in inverse order;
- applying a diffusion operator $U_s$ to the register $|e\rangle$, for amplifying coefficients of entangled states corresponding to DAG configurations, increasing their probability of being selected;
- randomly selecting a DAG configuration from the measurement of the resulting quantum state of the register $|e\rangle$.

More particularly, the oracle operator could be constructed with native multicontrolled Toffoli quantum gates and NOT (Pauli-X) quantum gates.

The method of the invention could also comprise a **transpilation step** which transform a quantum circuit comprising unitary operators to match a specific native gate set of a particular quantum device hardware, for running said quantum circuit on a real quantum hardware.

Said transformation is to be performed by decomposing the circuit quantum gates into the native gate set of the quantum device and optimizing, at the same time, to reduce noise effects, such as the ones introduced by noisy intermediate scale quantum (NISQ) computers.

In the method of the invention, all possible directed configurations of a given arbitrary undirected graph are labeled by relating the two directions of each edge to the state of a qubit, $|0\rangle$ or $11\rangle$, taking one of the two particular configurations of each edge as a reference, and determining that the state of the edge is $|1\rangle$ if the edge is measured in the reference configuration, and $10\rangle$ otherwise.

The arbitrary undirected graph could be identified with Feynman diagrams representing multiloop topologies, wherein an edge could be a union of multiple Feynman propagators connecting two interaction vertices, substituting the Feynman propagators by edges. The remaining loops of the arbitrary undirected graph define a number of eloops, smaller than the number of loops of the original Feynman diagram, and wherein feasible causal configurations are those for which the momentum flows of all propagators belonging to each edge are aligned in the same direction.

In the method of the invention, the cyclic clauses are implemented through the application of multicontrolled Toffoli gates, for determining if closed directed cycles exist. Those multicontrolled Toffoli gates could be native of the quantum device or transpiled into the native quantum gates of the quantum device.

The multicontrolled Toffoli operation Boolean clauses are defined as:

$$t(S_j) = \bigwedge_{k \in S_j} s_k, \quad \bar{t}(S_j) = \bigwedge_{k \in S_j} \bar{s}_k, \quad T(S_j) = t(S_j) \bigvee \bar{t}(S_j)$$

wherein $S_j$ contains the set of edges generating a closed cycle. It must be noted that the Boolean clauses $t(S_j)$ and $\bar{t}(S_j)$ probe the same closed cycle but with opposite edge directions.

Also, taking into account that the second quantum register $|a\rangle$ is initialized to $|1\rangle$, the application of one of said clauses unmarks cyclic configurations from $|a\rangle$.

In said implementation, the oracle operator is constructed through a sequential application of **multicontrolled Toffoli and NOT quantum gates.** The number of multicontrolled Toffoli gates required, is defined by the number of cycles to probe, bearing in mind that each cycle has two possible cyclic configurations.

The multicontrolled Toffoli gates comprises each one: control qubits, coincident with the edges involved in the cycle to probe, and a target qubit, being one of the qubits from the $|a\rangle$ register.

The method of the invention could further comprise a step, before applying the multicontrolled Toffoli gates, of aligning the state $|1\rangle$ of the edges involved in the cycle in the same direction, by the application of NOT quantum gates in the necessary qubits.

More particularly, the multicontrolled Toffoli gates flip the state of the target qubit to $|0\rangle$ if all the control qubits are in the $|1\rangle$ state, provided that the qubits in the $|a\rangle$ register are initialized in the $|1\rangle$ state.

Also, the method comprises a further step of, once all cyclic clauses are encoded in the oracle stage, tagging the oracle through a **multicontrolled Toffoli gate,** taking as control qubits all qubits of the second quantum register $|a\rangle$ and the fixed-state qubits from the first register $|e\rangle$, and as a target qubit the $|out\rangle$ qubit.

In some implementations, a set $S_j$ comprises **a fixed qubit,** i.e. a qubit in a definite state $|0\rangle$ or $|1\rangle$. In such a case, the method probes only one direction, i.e. only one of the two Boolean clauses, for validating, by using a multicontrolled Toffoli gate:

$$t(S_j) = \bigwedge_{k \in S_j} s_k, \quad \bar{t}(S_j) = \bigwedge_{k \in S_j} \bar{s}_k.$$

On the contrary, if the set $S_j$ does not comprise **a fixed qubit,** both Boolean clauses are probed by using:

$$T(S_j) = t(S_j) \bigvee \bar{t}(S_j),$$

for validating both directions of the closed cycle by using two multicontrolled Toffoli gates and storing the validation of both directions in a single qubit $|a_i\rangle$ since both configurations are mutually exclusive.

When the quantum implementation of the method comprises **a fixed qubit,** the complete set of DAG configurations is obtained by **reversing** the edge orientation of all generated DAG configurations or by repeating the procedure with the fixed-state qubit in the opposite state.

For obtaining a **feasible solution from the amplitude amplification stage,** the method could require multiple iterations. Thus, the method could further comprise a step of calculating the **number of iterations** ($t$) needed by applying:

$$\sin^2 \theta_t \sim 1,$$

wherein $\theta_t = (2t+1)\theta$ and $\theta$ being a mixing angle, defined as $\theta = \arcsin\left(\sqrt{r/N}\right)$, being r the number of DAG states and $N = 2^n$ the total number of possible states.

This calculation leads to three different scenarios:

- if $r << N14$ the oracle and diffusion **stages** are applied multiple times to achieve an optimal amplitude amplification;
- if $r \approx N/4$, the oracle and diffusion stages are performed only once; and
- if $r > N/4$ one or more qubits should be modified to achieve a solution.

In said last case, one technique to achieve a solution is fixing the states of one or two qubits in the first quantum register $|e\rangle$, more preferably, one qubit when $r \ll N/2$ and two qubits when $r \gg N/2$.

Alternatively, the method could further comprise a step of introducing an ancillary qubit to increase the total number of states without increasing the number of DAG solutions, more preferably when $r >> N/2$.

The method of the invention could also comprise a step of estimating a number of measurements or shots **to generate all** DAG configurations, with a statistical significance of $\Delta\sigma$ standard deviations in a quantum simulator, by:

$$N_{shots} \approx r \, (\Delta\sigma)^2,$$

assuming $\sin^2 \theta_t \sim 1$, where $t$ is the optimal number of times the oracle and diffusion operators are applied.

More particularly, for achieving a proper discriminant performance with a minimum number of shots the standard deviation is set to $\Delta\sigma \geq 3$.

**DESCRIPTION OF THE DRAWINGS**

FIG. 1 shows a directed graph with closed cycles (110), and a directed acyclic graph (120). In the context of Feynman diagrams, these diagrams are five-loop diagrams.

FIG. 2 is a representation of a multicontrolled Toffoli quantum gate (200) with three control qubits (210, 211, 212) and one target qubit (220). The control qubits are brought into superposition by Hadamard gates (230). The target qubit is initialized to the $|0\rangle$ state.

FIG. 3 is a quantum circuit model of the method based on multicontrolled Toffoli quantum gates for the generation of DAG configurations. The scheme of the procedure is composed by four stages: initialization of the quantum registers (310), definition of the oracle operator (320), application of the diffusion operator (330), and measurement (340).

FIG. 4 is a scheme of the diffusion operator acting on the qubits representing the edges of the graph (400). The diffusion operator is built from a sequence of Hadamard gates (410, 411, 412, 413), NOT (Pauli-X) gates (420,421), and one multicontrolled Toffoli gate (430).

FIG. 5 is a block diagram illustrating the operational flow of the procedure according to the description of this disclosure. It comprises a qubit initialization (500), the oracle operator (510), the diffusion operator (520), a measurement of the resulting quantum state (540) and the DAG selection (550). The procedure could be iterated (530) and a number of shots (560) is necessary to identify all DAG configurations.

FIG. 6 shows a graph consisting of three sets of edges and two common vertices joining the three sets. In the context of Feynman diagrams, this is a two-loop diagram. The direction of the arrows indicates the reference states, which are considered as $|1\rangle$.

FIG. 7 shows the quantum circuit generated according to the method of the invention corresponding to the graph of FIG. 6.

FIG. 8 shows the implementation of a quantum algorithm according to the state of the art, using CNOT gates for the binary clauses and multicontrolled Toffoli gates for the $|a\rangle$ and $|out\rangle$ registers, which corresponds to the graph of FIG.6.

FIG. 9 shows a quantum circuit representation a native Toffoli gate and the equivalent quantum circuit of the Toffoli gate transpiled to a quantum device with native gates consisting of I, RZ, SX, X, CNOT and a reset gate.

## PREFERRED EMBODIMENTS OF THE INVENTION

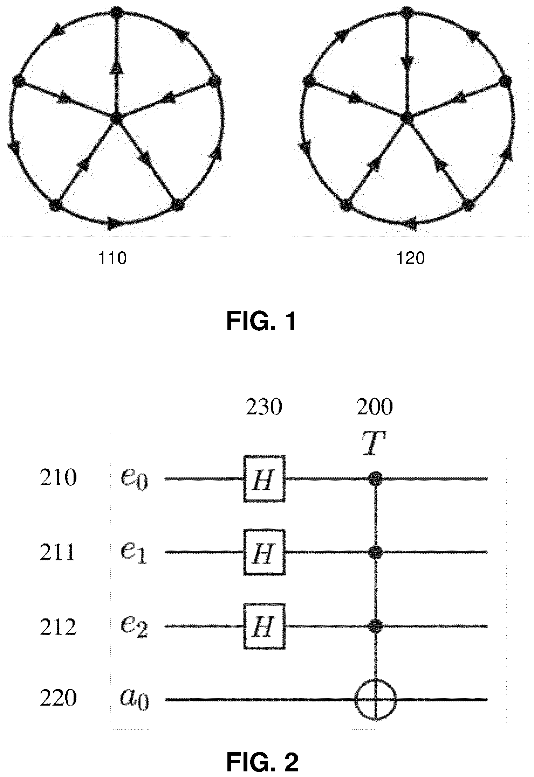

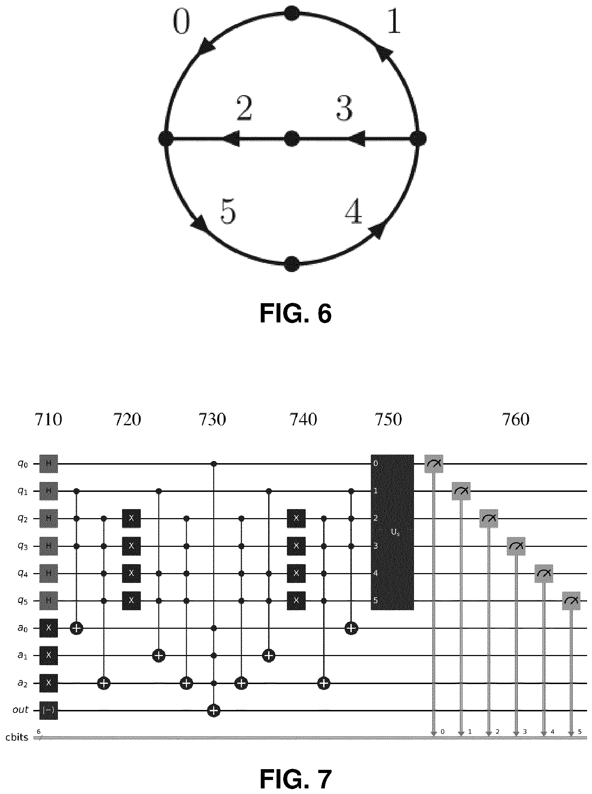

The invention provides a method encoded by a quantum circuit in a quantum computer system to generate efficiently and in a random order all possible DAG configurations of an arbitrary undirected graph, which is defined by a number of vertices and edges (e.g. FIG. 1, and FIG. 6).

The method is based on the proper engineering of an oracle operator constructed from multicontrolled Toffoli quantum gates (FIG. 2) and NOT (Pauli-X) quantum gates. All possible directed configurations of a given arbitrary undirected graph are labeled by relating the two directions of each edge to the state of a qubit, 10) or 11). Taking one of the two particular configurations of each edge as a reference; the state of the edge is considered 11) if the edge is measured in the reference configuration and 10) otherwise.

The implementation of the quantum circuit requires three quantum registers and one classical register. The first quantum register, $|e\rangle$, encodes the state of the edges needed to define a directed graph. The second quantum register, called the cycle clause register, $|a\rangle$, stores all the Boolean clauses to probe the DAG configurations. The third quantum register, $|out\rangle$, tags those configurations that satisfy all constraints stored in the $|a\rangle$ register. The classical register, $|c\rangle$, stores the result of the measurement of the resulting quantum state of the edge register $|e\rangle$ at the end of the procedure after the application of the oracle and diffusion operators.

The number of qubits needed in the edge register is $n$, which is the number of edges to set up a particular graph. The number of qubits in the cycle clause register is $m$, which is determined by the number of cycles to probe. One extra qubit, the oracle tagger, is needed to validate all conditions of acyclicity stored in the cycle clause register. These requirements are specified in TABLE I.

TABLE I.

| Register | Size (number of qubits) | Function |
|---|---|---|
| $|e\rangle$ | $n$ | Edges direction |
| $|a\rangle$ | $m$ | Cyclic clauses |
| $|out\rangle$ | 1 | Oracle tagger |
| **Register** | **Size (number of classical bits)** | **Function** |
| $|c\rangle$ | $n$ | Measurement register |

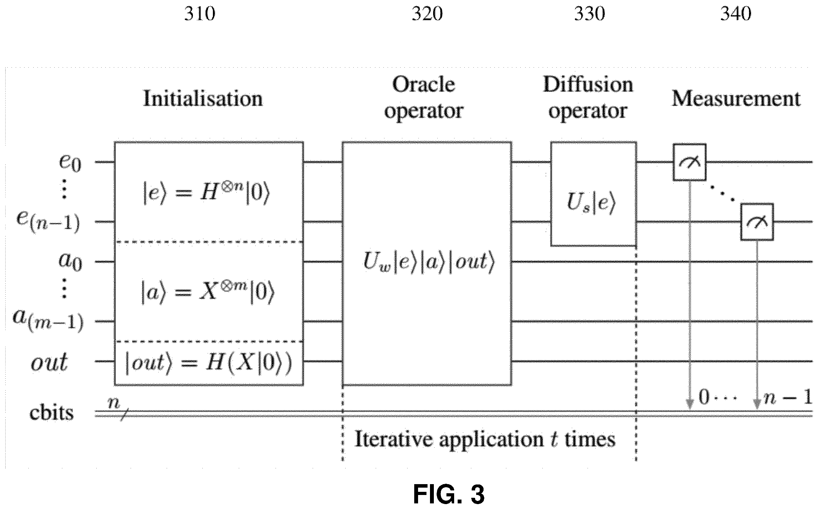

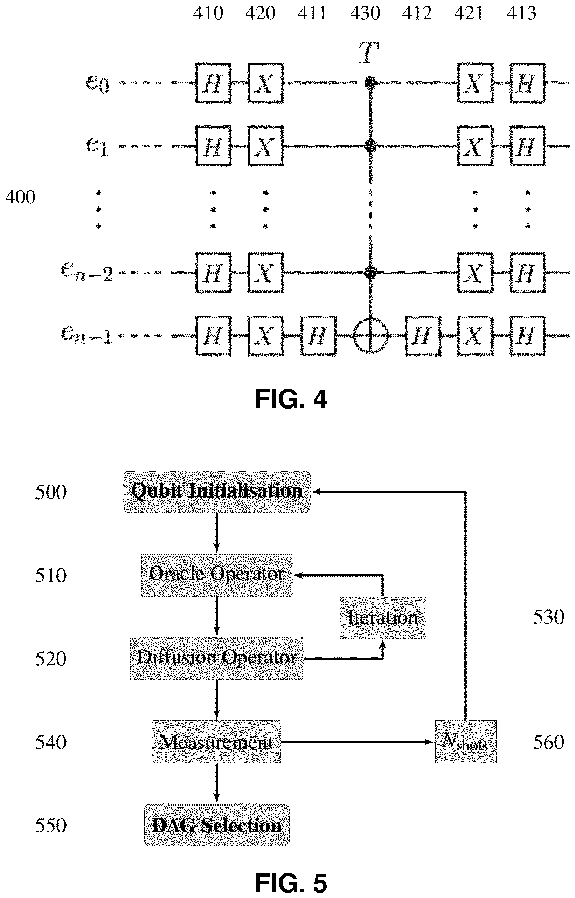

By default, the quantum circuit sets each qubit to the $|0\rangle$ state. After defining the required qubits, they are initialized (500 in FIG. 5) as follows: each qubit in the edge register $|e\rangle$ is prepared in a uniform superposition; the qubits in the $|a\rangle$ register are set in the 11) state; and the oracle's tagger qubit is initialized to the Bell $|-\rangle$ state. The initialization stage is shown in the first inset (310) of the quantum circuit diagram depicted in FIG. 3.

After initialization, the procedure continues with the implementation of the oracle operator stage (510 in FIG. 5 and second inset 320 in FIG. 3) which encodes all the conditions for generating DAG configurations from a given graph. The generation of DAGs is given by the identification and exclusion of directed cyclic configurations from among all possible directed graph configurations.

The oracle operator is constructed through a sequential application of multicontrolled Toffoli and NOT quantum gates. The number of multicontrolled Toffoli gates required is defined by the number of cycles to probe, each cycle has two possible cyclic configurations. The control qubits in each multicontrolled Toffoli gate are the edges involved in the cycle to probe and the target is one of the qubits from the $|a\rangle$ register.

Before applying the multicontrolled Toffoli gate over a cycle, the state $|1\rangle$ of all edges involved in the cycle must be aligned in the same direction, if not, the alignment is performed by the application of NOT quantum gates in the necessary qubits. Given the fact that the qubits in the $|a\rangle$ register are initialized in the $|1\rangle$ state, if all the control qubits are in the $|1\rangle$ state, the multicontrolled Toffoli gate flips the state of the target qubit to $|0\rangle$.

If the total number of DAG configurations of a graph is greater than one quarter of the total number of possible directed graph configurations, the state of at least one qubit (and a maximum of two qubits) is fixed through the oracle's tagger. If the multicontrolled Toffoli gate associated to a cycle clause is acting over the fixed-state qubit, only one direction of the cycle is probed, otherwise, two multicontrolled Toffoli gates are used to probe both directions of the cycle.

Once all cyclic clauses are encoded in the oracle stage, the oracle tagging is applied through a multicontrolled Toffoli gate taking as control qubits all qubits of the cycle clause register $|a\rangle$ together with the fixed-state qubit(s), and the $|out\rangle$ qubit as the target.

After applying the oracle operator, the procedure continues with the diffusion stage (520 in FIG. 5 and third inset 330 in FIG. 3). The diffusion operator used is specified in FIG. 4 and acts exclusively on the edge register $|e\rangle$ (400). It involves a sequence of Hadamard (410, 411, 412, 413) and NOT (Pauli-X) (420, 421) gates and one multicontrolled Toffoli gate (430). The diffusion operator amplifies the coefficients of the entangled states corresponding to acyclic configurations and, therefore, their probability of being selected after the measurement of the resulting quantum state of the edge register $|e\rangle$.

To achieve the optimal amplitude amplification the oracle and diffusion stages may have to be applied more than once (530). The number of iterations is defined given the value of the ratio $r/N$, with $r$ the total number of DAG configurations and $N = 2^n$ the total number of directed configurations.

If $r << N/4$ the oracle and diffusion operators are applied repeatedly; if $r \approx N/4$, the oracle and diffusion operators are performed only once; and if $r > N/4$ it is necessary to fix the state of at most two edge qubits to provide reliable results. The Table II shows the optimal number of iterations for different ratios between $r$ and $N$.

Table II.

| $r/N$ | Iterations |
| --- | --- |
| 0.25 | 1 |
| 0.10 | 2 |
| 0.05 | 3 |
| 0.03 | 4 |

After a measurement (540 in FIG. 5 and last inset 340 in FIG. 3), a single DAG configuration with a high probability is randomly selected (550) and the quantum superposition of the edge register collapse.

To generate all possible DAG configurations, the procedure is repeated a certain number of shots (560). The number of shots must be large enough to identify all DAG configurations and distinguishing them from the less probable directed cyclic graph configurations.

The estimated number of shots to generate all DAG configurations, with a statistical significance of $\Delta\sigma$ standard deviations in a quantum simulator, is given by:

$$N_{shots} \approx r\,(\Delta\sigma)^2,$$

assuming $\sin^2\theta_t \sim 1$, where $t$ is the optimal number of times the oracle and diffusion operators are applied. A proper discriminant performance with a minimum number of shots is obtained with $\Delta\sigma \geq 3$.

When a fixed-state qubit is used, the complete set of DAG configurations is obtained by reversing the edge orientation of all generated DAG configurations or by repeating the procedure with the fixed-state qubit in the opposite state.

To illustrate the algorithm implementation, a graph with six edges distributed pairwise in three sets of edges and two common vertices connecting the three sets is analyzed. This graph is depicted in FIG. 6. In the context of Feynman diagrams, this is a two-loop diagram, and the three additional vertices represent the insertion of external particles.

The size of the register $|e\rangle$ corresponding to FIG. 6 is $n = 6$, and the graph is defined through the Boolean functions: $s_0 = 0 \wedge 1$, $s_1 = 2 \wedge 3$ and $s_2 = 4 \wedge 5$, where the shorthand notation $i = e_i$ has been used. As previously stated, we start by a uniform superposition of the $N = 2^n$ states, with the application of Hadamard gates, $H$, to each qubit of the $|e\rangle$ register, $H^{\otimes n}|e_i\rangle$. The register $|a\rangle$ is initialized in the state $|1\rangle$ and the qubit $|out\rangle$ in the state $|\text{-}\rangle = H(X|0\rangle)$. This initialization is shown as the first step (710) of the quantum circuit in FIG. 7.

The clauses that exclude the cyclic and anticyclic configurations are placed after initialization and are given by:

$$a_0 = t(s_0 \wedge s_2),$$

$$a_1 = t(s_0 \wedge \bar{s}_1),$$

$$a_2 = T(s_1 \wedge s_2),$$

where $T(S_j)$ probes whether $S_j$ is in a cyclic or anticyclic configurations through $t(S_j)$ and $\bar{t}(S_j)$, respectively. The cyclic clauses $a_i$, are implemented by multicontrolled Toffoli gates that take as control the qubits $|e_i\rangle$ conformed by the sets $S_j$ and as target the corresponding qubit $|a_j\rangle$ (720). Specifically, the cyclic clauses $a_0$ and $a_1$ are implemented by a single multicontrolled Toffoli gate, $t(S_j)$, whereas $a_2$ is implemented by two multicontrolled Toffoli gates, $T(S_j) = t(S_j) \vee \bar{t}(S_j)$.

For the tagging of the DAG configurations, another multicontrolled Toffoli gate is used (730). In this case, the qubit $|e_0\rangle$ is fixed in order to get closer to $\sin^2(\theta_t) \sim 1$ in just one iteration. This multicontrolled Toffoli gate takes as control the qubit $|e_0\rangle$ and the qubits of the register $|a\rangle$ and as target the qubit of the register $|out\rangle$. The oracle operator is conformed until this step and involves the quantum registers, $|e\rangle$, $|a\rangle$ and $|out\rangle$. Then, the oracle operations are applied in reverse order (740). After the oracle stage, the diffusion operator $U_S$ (750) is applied over all the qubits of the register $|e\rangle$ to amplify the probabilities of the DAG configurations. Finally, the measurement of the quantum state of the register $|e\rangle$ (760) selects one of the DAG configurations from the quantum superposition.

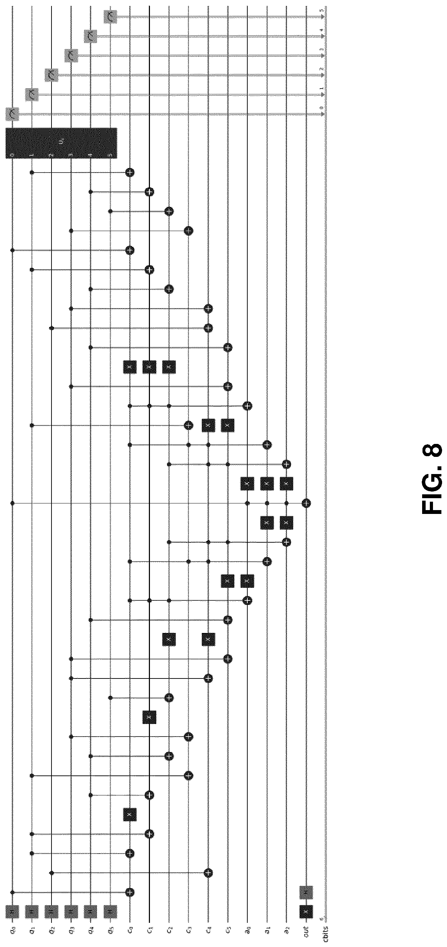

The efficiency of the quantum method of the invention is evaluated by comparing the implementation results with a state-of-the-art quantum algorithm based on the use of binary clauses between adjacent edges for the construction of the oracle operator (FIG. 8). The quantum method of this invention requires for the implementation of the graph in FIG. 6 the use of 10 qubits (FIG. 7) in comparison to the 16 qubits required for the equivalent state-of-the-art quantum algorithm. The quantum depth of the corresponding quantum circuits is also reduced from 22 to 14. For reference, the total number of DAG configurations is 46 from a total number of 64 directed configurations, and $\sin^2(\theta_1) = 0.88$ in one iteration.

The implementation of the quantum method of the invention for more complex graphs that the one in FIG. 6 also shows a significant reduction in the number of qubits required, as well as in the quantum depth. On the one hand, this feature allows graphs to be analyzed with fewer quantum resources. On the other hand, it allows the simulation of complex graphs that cannot be afforded with state-of-the-art quantum methods.

A final remark about multicontrolled Toffoli gates to be discussed is transpilation. The transpilation process consists of compiling a given quantum circuit to match the specific topology and native gate set of a particular quantum device hardware, as well as its optimization to run on the noisy intermediate scale quantum (NISQ) era computers. In the quantum circuit model, the high-level quantum circuits are built with unitary operators that are implemented as quantum gates. However, when running them on a real quantum hardware, they must undergo the decomposition of the unitary quantum gates into the native gate set of the target quantum device and optimize them to reduce the noise effects on the results output.

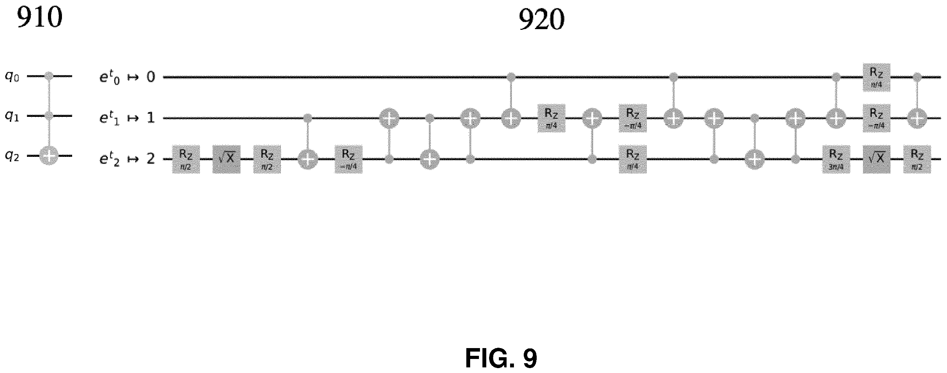

The impact on the quantum circuit depth for the transpilation of a Toffoli gate is illustrated in FIG. 9. The target device is a quantum device having a set of native gates consisting of I, RZ, SX, X, CNOT and a reset gate. The Toffoli gate shown in FIG. 9 (910) has a quantum depth of one while its transpilation results in a larger quantum depth of nineteen (920).

Each multicontrolled Toffoli gate in the quantum circuit transpilation is costly increasing the quantum depth considerably, which has an appreciable impact on the noise and gate errors. Although the quantum method of the invention is also subjected to the increase of the quantum depth due to transpilation, the final quantum depth of the transpiled quantum circuit is in general smaller than other state-of-the-art quantum methods. For example, a graph with eight edges and six vertices, which in the context of Feynman diagrams is a four-loop topology, is implemented with the quantum circuit of the invention with fourteen qubits, while the binary clauses approach requires twenty-five qubits. The transpilation process requires about 900 native gates on a quantum device, whereas with the binary clause approach it grows to about 1600 native gates in such a quantum device.

**Claims**

1.  A method for generating in a random order directed acyclic graph (DAG) configurations of a given graph in a quantum computing device comprising the steps of:

    - providing an arbitrary undirected graph in terms of vertices and edges;
    - defining a first quantum register $|e\rangle$, composed of $n$ qubits, which encodes directions of the edges;
    - defining Boolean functions:

    $$s_j \equiv \bigwedge_{i \in s_j} e_i, \quad \bar{s}_j \equiv \bigwedge_{i \in s_j} \bar{e}_i,$$

    where $s_j$ labels the set of edges $e_i$ connecting two non-adjacent vertices, the bar in $\bar{s}_j$ denotes that the qubit states in this set are inverted with NOT quantum gates ($|\bar{e}_i\rangle = X|e_i\rangle$); the number of edges in the set $s_j$ is denoted by $n_{s_j}$ and the total number of edges in the graph is:

    $$n = \sum_j n_{s_j};$$

    - defining a second quantum register $|a\rangle$, needing $m$ qubits, wherein $m$ is dependent on the number of cycles to probe;
    - defining a third quantum register, $|out\rangle$, needing one qubit, the oracle tagger, which stores a validation of acyclicity;

- defining a classical register, $|c\rangle$, which stores the measurement of the edge states at the end of the procedure;
- initializing the first quantum register, $|e\rangle$, in a uniform superposition by applying Hadamard gates to each of the $n$ qubits stored, by applying: $|e\rangle = H^{\otimes n}|0\rangle$;
- initializing the second quantum register $|a\rangle$, stating the cyclic clauses to $|1\rangle$ by the application of Pauli-X gates to the initial state, by applying: $|a\rangle = X^{\otimes m}|0\rangle$;
- initializing the third quantum register, $|out\rangle$, stating the tagging marker qubit to one of the Bell states by applying: $|out\rangle = H(X|0\rangle) \equiv |-\rangle$;
- applying an oracle operator, which encodes all the cyclic clauses for generating DAG configurations from a given arbitrary undirected graph, given by:

$$U_w|e\rangle|a\rangle|out\rangle = (-1)^{f(a,e)}|e\rangle|a\rangle|out\rangle,$$

where $f(a, e) = (\Lambda_i\, a_i) \wedge (\Lambda_j\, e_j)$ and $e_j$ are edge qubits whose states are fixed;
- returning all the qubits but $|out\rangle$ to their initial state by performing the oracle operations in inverse order;
- applying a diffusion operator $U_s$ to the register $|e\rangle$, for amplifying coefficients of entangled states corresponding to DAG configurations, increasing their probability of being selected;
- randomly selecting a DAG configuration from the measurement of the quantum state of the edge register.

2. The method of claim 1, wherein the oracle operator is constructed with native multicontrolled Toffoli quantum gates and NOT (Pauli-X) quantum gates.

3. The method of claim 1, further comprising a transpilation step for transforming a quantum circuit, comprising unitary operators of the DAG configurations implemented as quantum gates, to match a specific topology and native gate set of a particular quantum device hardware, by decomposing the quantum gates into said native gate set and optimizing, at the same time, to reduce noise and gate error effects.

4. The method of claim 1, wherein all possible directed graphs of a given arbitrary undirected graph are labeled by relating the two directions of each edge to the state of a qubit, 10) or 11), taking one of the two particular configurations of each edge as a reference, and determining that the state of the edge is $|1\rangle$ if the edge is measured in the reference configuration, and 10) otherwise.

5. The method of claim 1, wherein the arbitrary undirected graph is generated from a multiloop Feynman diagram or the sum of multiloop Feynman diagrams.

6. The method of claim 1, wherein the arbitrary undirected graph is made of edges and vertices obtained from Feynman diagrams representing multiloop topologies, wherein an edge is a union of multiple Feynman propagators or edges connecting two interaction vertices, where the remaining loops of the arbitrary undirected graph define a number of eloops, smaller than the number of loops of the original Feynman diagram, and wherein feasible DAG configurations are those for which the momentum flows of all propagators belonging to each edge are aligned in the same direction.

7. The method of claim 1, wherein cyclic clauses are implemented through the application of multicontrolled Toffoli gates, for determining if closed directed cycles exist.

8. The method of claim 1, wherein the multicontrolled Toffoli operation is defined by Boolean clauses as:

$$t(S_j) = \bigwedge_{k \in S_j} s_k, \quad \bar{t}(S_j) = \bigwedge_{k \in S_j} s_k, \quad T(S_j) = t(S_j) \bigvee \bar{t}(S_j)$$

wherein $S_j$ contains the set of edges generating a closed cycle.

9. The method of claim 1, wherein the number of multicontrolled Toffoli gates required is defined by the number of cycles to probe, each cycle having two possible cyclic configurations.

10. The method of claim 1, wherein the multicontrolled Toffoli gates comprise each one: control qubits, coincident with the edges involved in the cycle to probe, and a target qubit, being one of the qubits from the $|a\rangle$ register.

**11.** The method of claim 1, further comprising a step, before applying the multicontrolled Toffoli gates, of aligning the state $|1\rangle$ of the edges involved in the cycle in the same direction, by the application of NOT quantum gates in the necessary qubits.

**12.** The method of claim 1, wherein the multicontrolled Toffoli gates are configured to flip the state of the target qubit to $|0\rangle$ if all the control qubits are in the $|1\rangle$ state, provided that the qubits in the $|a\rangle$ register are initialized in the $|1\rangle$ state.

**13.** The method of claim 1, further comprising a step of, once all cyclic clauses are encoded in the oracle stage, tagging the oracle through a multicontrolled Toffoli gate, taking as control qubits all qubits of the second quantum register $|a\rangle$ and the fixed-state qubits, and as a target qubit the $|out\rangle$ qubit.

**14.** The method of claim 1, wherein:

- if the set $S_j$ comprises a fixed qubit, being this qubit in a definite state, $|0\rangle$ or $|1\rangle$, probing only one direction with one of the two possible Boolean clauses, by using a multicontrolled Toffoli gate:

$$t(S_j) = \bigwedge_{k \in S_j} s_k, \quad \bar{t}(S_j) = \bigwedge_{k \in S_j} s_k.$$

- if the set $S_j$ does not comprise a fixed qubit, probing both Boolean clauses:

$$T(S_j) = t(S_j) \bigvee \bar{t}(S_j),$$

for validating both directions of the closed cycle by using two multicontrolled Toffoli gates and storing the validation of both directions in a single qubit $|a_i\rangle$ since both configurations are mutually exclusive.

**15.** The method of claim 8, wherein if the set $S_j$ comprises a fixed qubit, the complete set of DAG configurations is obtained by reversing the edge orientation of all generated DAG configurations or by repeating the procedure with the fixed-state qubit in the opposite state.

**16.** The method of claim 1, further comprising a step of calculating a number of iterations ($t$) needed to obtain a feasible amplitude amplification by applying:

$$\sin^2 \theta_t \sim 1,$$

wherein $\theta_t = (2t + 1)\theta$ and $\theta$ being a mixing angle, defined as $\theta = \arcsin\left(\sqrt{r/N}\right)$, being $r$ the number of DAG states and $N = 2^n$ the total number of possible states.

**17.** The method of claim 16, wherein if:

- if $r \ll N/4$ the oracle and diffusion stages are applied multiple times to achieve an optimal amplitude amplification;
- if $r \approx N/4$, the oracle and diffusion stages are performed only once; and
- if $r > N/4$:

    ◦ the method further comprises the step of fixing one or two qubits in the first quantum register $|e\rangle$; or
    ◦ the method further comprises the step of introducing ancillary qubits to increase the number of total states without increasing the number of solutions.

**18.** The method of claim 1, further comprising a step of estimating a number of shots to generate all DAG configurations, with a statistical significance of $\Delta\sigma$ standard deviations in a quantum simulator, by:

$$N_{shots} \approx r \, (\Delta\sigma)^2,$$

assuming $\sin^2 \theta_t \sim 1$, where $t$ is the optimal number of times the oracle and diffusion operators are applied.

19. The method of claim 18, wherein $\Delta\sigma \geq 3$ for achieving a proper discriminant performance with a minimum number of shots.

110

120

**FIG. 1**

**FIG. 2**

FIG. 3

410  420  411  430  412  421  413

**FIG. 4**

**FIG. 5**

**FIG. 6**

**FIG. 7**

FIG. 8

**FIG. 9**

EP 4 610 893 A1

Europäisches
Patentamt

European
Patent Office

Office européen
des brevets

# EUROPEAN SEARCH REPORT

**Application Number**

EP 24 38 2213

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SELOMIT RAM\'IREZ-URIBE ET AL: "Quantum algorithm for Feynman loop integrals", ARXIV.ORG, CORNELL UNIVERSITY LIBRARY, 201 OLIN LIBRARY CORNELL UNIVERSITY ITHACA, NY 14853, 29 October 2021 (2021-10-29), XP091066239, * ABSTRACT * * p2-3, 5, 9-10 * * Table 1 * | 1-19 | INV. G06N10/20 G06N10/60 ADD. G06N10/80 |
| A | VIJAYANANDA MOHIRE: "Non-Functional Requirements for Quantum", IEEE DRAFT WGDS; 986193955698, IEEE-SA IMEET CENTRAL, PISCATAWAY, NJ USA , vol. 2995 18 July 2022 (2022-07-18), pages 1-12, XP068273731, Retrieved from the Internet: URL:https://ieee-sa.imeetcentral.com/p/aQA AAAAE9pG_ [retrieved on 2022-07-20] * Abstract * * page 97 * | 3 | |

**TECHNICAL FIELDS SEARCHED (IPC)**

G06N

The present search report has been drawn up for all claims

| Place of search | Date of completion of the search | Examiner |
|---|---|---|
| The Hague | 26 July 2024 | Veynachter, Alexis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 113326402 A